# EUROPÄISCHE PATENTANMELDUNG

(11) **EP 3 572 272 A1**
(43) Veröffentlichungstag der Anmeldung: **27.11.2019**
(21) Anmeldenummer: 19173354.2
(22) Anmeldetag: 08.05.2019
(51) Int. Cl.: B60L 53/30, B60L 53/14, H02J 50/80, B60L 53/31, B60L 53/67

(54) **LADEANLAGE, LADEVERFAHREN UND LADESYSTEM**

(30) Priorität: 25.05.2018 DE 102018112622
(71) Anmelder: EnBW Energie Baden-Württemberg AG, 76131 Karlsruhe (DE)
(72) Erfinder: Wittenberg, Bernhard, 70197 Stuttgart (DE); Berber, Ibrahim, 71065 Sindelfingen (DE); Perrino, Domenico, 70597 Stuttgart (DE); Benze, Konrad, 70186 Stuttgart (DE); Augustin, André, 71570 Oppenweiler (DE); Nagel, Heiko, 75245 Neulingen (DE)
(74) Vertreter: Durm Patentanwälte PartG mbB

(57) **Zusammenfassung**

Die vorliegende Erfindung betrifft eine Ladeanlage (16) zum Wechselstrom-Laden von Elektromobilen (10) an einer Mehrzahl von Ladepunkten (18), mit: einer Anschlussschnittstelle (20) zum Beziehen einer Eingangsspannung; mehreren Ladeeinheiten (22) zum Bereitstellen einer Ladespannung basierend auf der Eingangsspannung; mehreren Ladeschnittstellen (26) zum Weiterleiten der Ladespannung an die Mehrzahl von Ladepunkten, wobei die Anzahl der Ladeschnittstellen größer als die Anzahl der Ladeeinheiten ist; mehreren Umschalteinheiten (24) zum Anlegen der Ladespannung einer Ladeeinheit an eine auswählbare Ladeschnittstelle, wobei jede Umschalteinheit einer Ladeeinheit zugeordnet ist und mindestens zwei Schaltpositionen zum Schalten der Ladespannung zu einer ersten oder einer zweiten ausgewählten Ladeschnittstelle umfasst und wobei die mehreren Umschalteinheiten für jede Ladeschnittstelle mindestens eine Schaltposition zum Schalten der Ladespannung zu dieser Ladestelle umfassen; und einer Steuereinheit (28) zum Konfigurieren der mehreren Umschalteinheiten, um die Ladespannung zu mindestens einer ausgewählten Ladeschnittstelle zu schalten. Die vorliegende Erfindung betrifft weiterhin ein Ladeverfahren sowie ein Ladesystem (14) zum Wechselstrom-Laden von Elektromobilen.

## Beschreibung

Die vorliegende Erfindung betrifft eine Ladeanlage, ein Ladeverfahren und ein Ladesystem zum Wechselstrom-Laden einer Mehrzahl von Elektromobilen.

Die fortschreitende Entwicklung hin zur Elektromobilität erfordert das Bereitstellen einer entsprechenden Ladeinfrastruktur zum Laden von Elektromobilen. Entsprechende Ladestationen sind dabei beispielsweise als Ladesäulen oder auch als Wandladestationen (Wallbox) ausgebildet. Die Ladestationen stellen die für das Laden der Batterien notwendige elektrische Leistung bereit. Elektromobile können zumeist im Umfeld der Ladestation abgestellt werden und für die Dauer des Ladevorgangs angekoppelt werden.

In der Ladestation ist die notwendige Ladetechnik integriert, um ausgehend von der Netzspannung des Stromnetzes eine entsprechende Ladespannung zum Laden zu erzeugen. Die Ladespannung kann dann an das Elektromobil weitergegeben werden. Die Ladestationen können dabei Wechselstrom (AC) oder auch Gleichstrom (DC) bereitstellen. Je nach Art des Elektromobils muss die angelegte Spannung dann in die für den eigentlichen Batterieladevorgang erforderliche Gleichspannung umgewandelt werden. Hierbei spricht man von Wechselstrom-Laden (AC-Laden), wenn eine Wechselspannung über das Ladekabel an ein Ladegerät im Fahrzeug übertragen wird und von Gleichstrom-Laden (DC-Laden), wenn eine Gleichspannung übertragen wird und im Fahrzeug keine Gleichrichtung mehr erfolgen muss. Abhängig vom verwendeten Ansatz zum Laden werden Batterie-Ladezeiten für Elektroautos bei Verwendung von Standardsteckern oft mit einer bis vier Stunden bis zur Vollladung angegeben, wobei Schnellladesysteme auch wesentlich kürzere Ladezeiten ermöglichen.

Aufgrund der vergleichsweise hohen Ladeleistungen müssen die Ladestationen dabei verschiedene Sicherheitseinrichtungen umfassen, um einerseits die Sicherheit des Benutzers zu gewährleisten und andererseits auch eine Beschädigung des Elektromobils oder der Umgebung zu verhindern. Hierbei sind verschiedene gesetzliche Vorschriften und Normen zu erfüllen, die einen hohen Sicherheitsstandard bewirken aber auch zu vergleichsweise hohen Kosten für eine Ladestation führen.

Aufgrund der immer weiteren Verbreitung von Elektromobilen besteht eine Herausforderung darin, Ladevorgänge effizient und komfortabel zu gestalten. Wartezeiten an Tank- bzw. Ladestellen und Leerlaufzeiten während langer Ladevorgänge sollen vermieden werden. Aufgrund der Tatsache, dass das Stromnetz im Prinzip überall verfügbar ist und es damit keine Notwendigkeit für zentrale Ladepunkte entsprechend klassischer Tankstellen mehr gibt, spielen in diesem Zusammenhang Konzepte zur Integration einer Ladeinfrastruktur zum Laden mehrerer Elektromobile in Parkplätze oder Parkhäuser eine immer größere Rolle.

In diesem Zusammenhang betrifft die WO 2011/118193 A1 ein Ladegerät, ein Ladesystem und ein Ladeverfahren. Ein Ladegerät vereinfacht das Laden mehrerer Fahrzeuge, wenn das Gerät gemeinsam von mehreren Benutzern verwendet wird. Ein Fahrzeugladegerät ist an eine Mehrzahl von Reservierungsterminals angeschlossen und stellt einen Ladestrom für eine Mehrzahl an Fahrzeugen zur Verfügung auf Basis von Reservierungsinformationen, die über die Reservierungsterminals eingegeben werden. Das Fahrzeugladegerät erhält die Reservierungsinformationen von den Reservierungsterminals, ermittelt Ladezeit-Managementinformationen für jedes Fahrzeug auf der Basis der Reservierungsinformationen und steuert den Ladestrom, der aufgeteilt und der Mehrzahl an Fahrzeugen basierend auf den Ladezeit-Managementinformationen zur Verfügung gestellt wird.

In der WO 2013/032519 A1 wird ein Multiport-Gleichspannungsladesystem mit variabler Leistungsaufteilung beschrieben. Insbesondere werden eine Batterieladestation und ein Verfahren bereitgestellt. Die Ladestation umfasst eine Mehrzahl an Ladeports und eine Mehrzahl an Leistungsstufen, wobei jede Leistungsstufe einen Teil der gesamten verfügbaren Ladeleistung bereitstellt.

In der US 2011/0291616 A1 wird ein Universalladegerät offenbart. Das Gerät umfasst zumindest einen Wechselstrom-Anschluss, einen AC/DC-Wandler, eine Gleichstrom-Endstelle zum Ausgeben einer Gleichstrom-Ladeleistung und einen Schalter zum An- und Abschalten einer Gleichstromausgabe.

Nachteilig an den bisherigen Ansätzen sind die vergleichsweise hohen Kosten der Ladeinfrastruktur. Eine Herausforderung besteht demnach darin, unter Berücksichtigung der immer größeren Anzahl von Elektromobilen, die Kosten für die Bereitstellung und den Betrieb der Ladeinfrastruktur gering zu halten beziehungsweise weiter zu reduzieren. Eine zuverlässige und kostengünstig installierbare Ladeinfrastruktur ermöglicht eine hohe Verbreitung, sodass Elektromobile zeitlich und räumlich flexibel und damit komfortabel für die Benutzer geladen werden können. Ausgehend hiervon stellt sich der vorliegenden Erfindung demnach die Aufgabe, einen in Installation und Betrieb kostengünstigen Ansatz zum Laden von Elektromobilen bereitzustellen. Hierdurch soll den Benutzern von Elektromobilen ein komfortables Laden ermöglicht werden. Insbesondere soll ein Laden von Elektromobilen während des Parkens auf Parkplätzen und in Parkhäusern ermöglicht werden, sodass der Ladevorgang weitestgehend ohne Beeinträchtigung der Nutzer durchgeführt werden kann.

Zur Lösung dieser Aufgabe betrifft ein Aspekt der vorliegenden Erfindung eine Ladeanlage zum Wechselstrom-Laden von Elektromobilen an einer Mehrzahl von Ladepunkten mit:
einer Anschlussschnittstelle zum Beziehen einer Eingangsspannung;
mehreren Ladeeinheiten zum Bereitstellen einer Ladespannung basierend auf der Eingangsspannung;
mehreren Ladeschnittstellen zum Weiterleiten der Ladespannung an die Mehrzahl von Ladepunkten, wobei die Anzahl der Ladeschnittstellen größer als die Anzahl der Ladeeinheiten ist;
mehreren Umschalteinheiten zum Anlegen der Ladespannung einer Ladeeinheit an eine auswählbare Ladeschnittstelle, wobei jede Umschalteinheit einer Ladeeinheit zugeordnet ist und mindestens zwei Schaltpositionen zum Schalten der Ladespannung zu einer ersten oder einer zweiten ausgewählten Ladeschnittstelle umfasst und wobei die mehreren Umschalteinheiten für jede Ladeschnittstelle mindestens eine Schaltposition zum Schalten der Ladespannung zu dieser Ladestelle umfassen; und
einer Steuereinheit zum Konfigurieren der mehreren Umschalteinheiten, um die Ladespannung zu mindestens einer ausgewählten Ladeschnittstelle zu schalten.

In einem weiteren Aspekt betrifft die vorliegende Erfindung ein Ladeverfahren zum Wechselstrom-Laden von Elektromobilen an einer Mehrzahl von Ladepunkten, mit den Schritten:
Beziehen einer Eingangsspannung über eine Anschlussschnittstelle;
Bereitstellen einer Ladespannung basierend auf der Eingangsspannung an mehreren Ladeeinheiten;
Weiterleiten der Ladespannung an die Mehrzahl von Ladepunkten in mehreren Ladeschnittstellen, wobei die Anzahl der Ladeschnittstellen größer als die Anzahl der Ladeeinheiten ist;
Anlegen der Ladespannung an eine auswählbare Ladeschnittstelle in mehreren Umschalteinheiten, wobei jede Umschalteinheit einer Ladeeinheit zugeordnet ist und mindestens zwei Schaltpositionen zum Schalten der Ladespannung zu einer ersten oder einer zweiten ausgewählten Ladeschnittstelle umfasst und wobei die mehreren Umschalteinheiten für jede Ladeschnittstelle mindestens eine Schaltposition zum Schalten der Ladespannung zu dieser Ladestelle umfassen; und
Konfigurieren der mehreren Umschalteinheiten in einer Steuereinheit, um die Ladespannung zu mindestens einer ausgewählten Ladeschnittstelle zu schalten.

Zudem betrifft ein Aspekt der Erfindung ein Ladesystem zum Wechselstrom-Laden von Elektromobilen, mit:
einer Ladeanlage wie zuvor beschrieben; und
einer Mehrzahl von Ladepunkten zum Anschließen von Elektromobilen für einen Ladevorgang, wobei die Ladepunkte an die Ladeschnittstellen angebunden sind.

Bevorzugte Ausgestaltungen der Erfindung werden in den abhängigen Ansprüchen beschrieben. Es versteht sich, dass die Ladeanlage sowie das System und das Verfahren entsprechend der für die Ladeanlage und das System in den abhängigen Ansprüchen beschriebenen Ausgestaltungen ausgeführt sein können.

Erfindungsgemäß ist vorgesehen, dass die Ladeanlage über mehrere Ladeschnittstellen mehrere Ladepunkte versorgen kann. Hierdurch kann die Ladeanlage beispielsweise in einem Parkhaus oder in einem Parkplatz zum Laden von mehreren Elektromobilen verwendet werden. In der Ladeanlage wird eine Eingangsspannung, die vorzugsweise einer Netzspannung entspricht, in eine Ladespannung umgewandelt, wobei unter einer Umwandlung insbesondere ein Schalten (An/Aus) einer Spannungsweiterleitung verstanden werden kann. Die Umwandlung erfolgt dabei in mindestens zwei Ladeeinheiten, so dass ein Laden von mindestens zwei Elektromobilen möglich ist. Durch die Verwendung von mehreren Umschalteinheiten, wobei jeder Ladeeinheit eine Umschalteinheit zugeordnet ist, wird ermöglicht, dass die von den Ladeeinheiten erzeugten Ladespannungen an mehreren Ladeschnittstellen zur Verfügung gestellt werden. Hierbei ist die Anzahl der Ladeschnittstellen größer als die Anzahl an Ladeeinheiten.

Durch die Umschalteinheiten kann jeweils die Ladespannung an eine auswählbare Ladeschnittstelle angelegt werden. Über die Ladeschnittstellen werden Ladepunkte versorgt, an denen die Elektromobile angeschlossen sind. Ein Ladepunkt kann dabei zum kabelgebundenen oder auch zum kabellosen (insbesondere induktiven) Energietransport an das Elektromobil ausgebildet sein. Die Umschalteinheiten entsprechen sozusagen Schaltern, die ein Aufschalten der Ladespannung an die verschiedenen Ladeschnittstellen erlauben. Jede Ladeschnittstelle ist über mindestens eine Umschalteinheit erreichbar. Mindestens ein Teil der Ladeschnittstellen ist jedoch über mehrere Umschalteinheiten erreichbar, die Ladespannung einer Ladeeinheit kann je nach Auswahl also unterschiedlichen Ladeschnittstellen aufgeschaltet werden. Hierdurch wird erreicht, dass unabhängig davon, an welchen Ladepunkten Elektromobile geladen werden sollen, gleichzeitig Ladevorgänge durchgeführt werden können.

Die Verwendung der Umschalteinheiten ermöglicht, dass eine Zuordnung und Weiterschaltung der Ladeleistung an diejenigen Ladepunkte erfolgen kann, an denen Elektromobile stehen. Im Gegensatz zu bisherigen Ansätzen, bei denen an verschiedenen Abstellplätzen in einem Parkplatz oder in einem Parkhaus jeweils eine separate Ladesäule mit separater Ladetechnik vorgesehen war, ist in einem erfindungsgemäßen Ladesystem lediglich ein einfacher Ladepunkt ohne eigene Ladetechnik pro Abstellplatz vorgesehen. Die erforderliche Ladetechnik ist an einer zentralen Stelle in einer Ladeanlage integriert und kann je nach Bedarf unterschiedlichen Ladepunkten zugeschaltet werden. Zudem ermöglichen die mehreren Umschalteinheiten auch eine Redundanz, wenn eine einzelne Ladeeinheit ausfällt.

Die Anzahl der Ladepunkte übersteigt die Anzahl der Ladetechniken (Ladeeinheiten). Es wird ausgenutzt, dass in den allermeisten Fällen nicht alle möglichen Ladepunkte gleichzeitig in Verwendung sind. Die Ladeeinheit wird jeweils nur denjenigen Ladepunkten zugeschaltet, an denen ein Ladevorgang durchgeführt werden soll. Die Ladepunkte sind dabei wesentlich kostengünstiger realisierbar als eine Ladestation pro Parkplatz, sodass Kosten gespart und ein effizientes Aufladen ermöglicht werden. Insbesondere wird es erreicht, dass eine Ladelösung zu vertretbaren Kosten eine Vielzahl an Ladepunkten zur Verfügung stellen kann. Die Anzahl an Ladepunkten, aber auch die Anzahl an Ladetechniken bleibt auch nach der Installation flexibel und kann bei Bedarf erweitert werden. Durch die Verfügbarkeit von Ladepunkten (Anschlüssen) an vielen Parkplätzen kann der Ladevorgang erfolgen, während das Fahrzeug geparkt ist. Ein separates Anfahren einer Ladestelle und ein Abwarten der Zeit bis zur Vollladung, um die Ladestelle baldmöglichst wieder freizugeben, ist nicht notwendig.

Im Gegensatz zu dem aus der WO 2011/118193 A1 bekannten Ansatz kann an jedem einzelnen Anschlusspunkt für ein Elektromobil (Ladepunkt) die volle Ladeleistung zur Verfügung gestellt werden. Die Ladeleistung wird also nicht aufgeteilt, sondern jeder Ladepunkt wird von einer dediziert zugeordneten Ladeeinheit versorgt und verhält sich für das Elektromobil genau wie eine Ladestation mit vollständiger integrierter Ladetechnik. Durch die erfindungsgemäße Verwendung von mindestens zwei Ladetechniken, die unterschiedlichen Ladeschnittstellen zuordenbar sind, wird zudem eine Redundanz gegenüber einem Ausfall einzelner Komponenten erreicht. Weiterhin wird der Komfort für den Fahrer des Elektromobils erhöht, da ein an einem Ladepunkt abgestelltes Fahrzeug lediglich diesen Ladepunkt blockiert, sodass ein Ladevorgang während des Parkens erfolgen kann. Es ist nicht notwendig, den Ladepunkt sofort wieder für andere Elektromobile freizugeben, da die Ladeeinheit einfach weitergeschaltet werden kann. Die Kosten für die Installation und den Betrieb der Ladelösung werden verringert.

Im Gegensatz zu dem aus der WO 2013/032519 A1 bekannten Ansatz aus dem Bereich des Gleichstrom-Ladens bezieht sich die vorliegende Erfindung auf das Wechselstrom-Laden. Beim Wechselstrom-Laden wird immer nur eine einfache (1-zu-1) Zuordnung zwischen Ladetechnik und Fahrzeug bzw. Batterie vorgenommen. Ein Zusammenschalten mehrerer Leistungsstufen zum Laden eines Fahrzeugs vergleichbar zu dem aus der WO 2013/032519 A1 bekannten Gleichstrom-Ansatz ist im Bereich des Wechselstrom-Ladens nicht möglich.

In einer bevorzugten Ausgestaltung der Ladeanlage umfassen die mehreren Umschalteinheiten für eine der Anzahl der Ladeeinheiten entsprechende Anzahl an Ladeschnittstellen jeweils genau eine Schaltposition, in der die Ladespannung zu der Ladeschnittstelle geschaltet ist; und jede Umschalteinheit umfasst vorzugsweise höchstens eine Schaltposition, in der die Ladespannung zu einer Ladeschnittstelle geschaltet ist, zu der die Ladespannung nur von einer Ladeschnittstelle geschaltet werden kann. Einige Ladeschnittstellen können vorzugsweise also nur von genau einer Umschalteinheit bzw. von genau einer Ladeeinheit versorgt werden. Sofern eine Ladeschnittstelle belegt ist, die nur von einer Umschalteinheit aus erreichbar ist, wird sie von der entsprechenden Umschalteinheit aus versorgt. Diese Umschalteinheit bzw. die zugeordnete Ladeeinheit kann dann keine andere Ladeschnittstelle mehr versorgen. Sofern an einer anderen von dieser Umschalteinheit aus erreichbaren Ladeschnittstelle ebenfalls ein Ladevorgang durchgeführt werden soll, muss dies über die von einer anderen Ladeeinheit bereitgestellte Ladespannung (die über eine andere Umschalteinheit der Ladeschnittstelle aufgeschaltet wird) erfolgen. Dies ist insoweit kostenoptimal, als dass eine übermäßig redundante Verschaltung und Verkabelung vermieden wird.

In einer vorteilhaften Ausgestaltung umfassen die mehreren Umschalteinheiten jeweils ein Relais, vorzugsweise fünf Relais, pro erreichbarer Ladeschnittstelle; und/oder eine Schaltposition, in der die Ladespannung zu keiner Ladeschnittstelle geschaltet ist. Das Relais dient dabei zum Schalten der Ladespannung. Dadurch, dass üblicherweise das Schalten vergleichsweise hoher Spannungen und Leistungen erforderlich ist, kann durch die Verwendung des Relais als leistungselektronischem Bauteil ein effizientes Schalten ermöglicht werden. Über fünf Relais können dabei beispielsweise drei Phasen sowie ein Neutralleiter und eine Steuerleitung geschaltet werden. Relais sind als häufig verwendete leistungselektronische Bauteile vergleichsweise günstig verfügbar und erlauben damit eine kostengünstige Realisierung der Umschalteinheiten. Durch die Bereitstellung einer neutralen Schaltposition, in der die Ladespannung nicht weitergeleitet wird, kann ein sicherer (Ruhe-) Zustand bereitgestellt werden. Es wird also nicht unter Last geschaltet. Eine zusätzliche Absicherung ist dann gegebenenfalls nicht erforderlich.

In einer weiteren vorteilhaften Ausgestaltung umfasst die Ladeanlage eine Kommunikationseinheit zum Aufbauen einer Kommunikationsverbindung mit einem Ladepunkt, um zu registrieren, ob sich ein Elektromobil an dem Ladepunkt befindet, wobei die Steuereinheit dazu ausgebildet ist, die Umschalteinheiten zu konfigurieren, um die Ladespannung zu dem Ladepunkt zu schalten, wenn sich ein Elektromobil an dem Ladepunkt befindet; und die Kommunikationseinheit vorzugsweise in die Steuereinheit integriert ist. Die Kommunikationseinheit ermöglicht im Zusammenspiel mit der Kommunikationsverbindung eine Detektion eines Elektromobils an einem Ladepunkt. Erst wenn sich ein Elektromobil an einem Ladepunkt befindet, also an diesem Ladepunkt angeschlossen ist, und ein Ladevorgang gestartet werden soll, wird diesem Ladepunkt die Ladespannung aufgeschaltet. Durch diese Anwesenheitsdetektion wird die Sicherheit erhöht, da die Ladespannung lediglich während des Ladevorgangs aufgeschaltet ist. Zudem kann die Steuerung der Umschalteinheiten auf Basis der Anwesenheitsdetektion erfolgen, so dass jeweils nur dort eine Ladespannung verfügbar ist, wo sie auch benötigt wird.

In einer vorteilhaften Ausgestaltung ist die Kommunikationseinheit zum Aufbauen der Kommunikationsverbindung über ein Netzwerkkabel ausgebildet; und ist die Kommunikationseinheit vorzugsweise zum Durchführen eines Pulsweitenmodulationsverfahrens über eine Ader des Netzwerkkabels ausgebildet, um zu registrieren, ob sich ein Elektromobil an dem Ladepunkt befindet. In bisherigen Systemen erfolgte die Detektion, ob ein Fahrzeug am Ladepunkt angeschlossen ist, üblicherweise über einen Proximity-Pilot (PP)- oder Control-Pilot (CP)-Kontakt eines Anschlusssteckers. Da erfindungsgemäß nicht notwendigerweise eine Ladeeinheit zum Ladepunkt geschaltet ist, weil die zugeordnete Umschalteinheit eine andere Schaltposition haben kann, ist vorteilhafterweise die Verwendung eines alternativen Systems zur Anwesenheitsdetektion vorgesehen. Durch die Verwendung einer Kommunikation über ein Netzwerkkabel kann die Anwesenheitsdetektion und/oder die Kommunikation bezüglich des Beginns eines Ladevorgangs über ein Netzwerkkabel erfolgen. Dem angeschlossenen Elektromobil wird sozusagen das Vorhandensein eines Ladecontrollers über ein Netzwerkkabel vorgespielt. Ein Netzwerkkabel ermöglicht eine Kommunikation über eine längere Distanz als ein herkömmliches Ladekabel und ist zudem wesentlich günstiger erhältlich. Es wird sichergestellt, dass die Ladeanlage auch an einem Parkplatz oder in einem Parkhaus verwendet werden kann, in dem die einzelnen Ladepunkte in räumlicher Distanz zur Ladeanlage angeordnet sind, so dass die Kommunikation über längere Strecken im Bereich mehrerer Dutzend Meter durchgeführt werden muss.

In einer weiteren Ausgestaltung umfasst die Ladeanlage einen Ladecontroller zum Ansteuern einer Ladeeinheit, um die Bereitstellung der Ladespannung zu initiieren, wobei die mehreren Ladeeinheiten vorzugsweise jeweils einen Ladecontroller umfassen. Der Ladecontroller übernimmt dabei die Kommunikation mit dem angeschlossenen Elektromobil. Insbesondere werden die erforderlichen Informationen abgefragt. Basierend hierauf wird durch den Ladecontroller eine entsprechende Leistungselektronik in der Ladeeinheit angesteuert, um den Ladevorgang durchzuführen.

Vorzugsweise ist die Steuereinheit zum Steuern des Ladecontrollers ausgebildet, um die Bereitstellung der Ladespannung zu initiieren, wenn die mehreren Umschalteinheiten konfiguriert sind. Zunächst werden die Umschalteinheiten entsprechend eingestellt, dann wird die Kommunikation zwischen Elektromobil und Ladeeinheit über den Ladecontroller initiiert. Das entsprechende Steuersignal wird zusätzlich zu der Ladespannung über die Umschalteinheiten zwischen Ladeschnittstelle und Ladeeinheit geschaltet. Ein Informationsaustausch zwischen Ladeeinheit und dem aktuell zu ladenden Elektromobil wird ermöglicht. Hierbei können insbesondere standardisierte Kommunikationsprotokolle verwendet werden (z. B. ISO Norm 15118 oder IEC 61851, Mode 3).

Weiterhin vorteilhafterweise umfassen die mehreren Ladeeinheiten jeweils einen Ladecontroller; und die mehreren Umschalteinheiten sind jeweils zum Schalten einer Steuerleitung zwischen dem Ladecontroller und dem ausgewählten Ladepunkt ausgebildet. Für das angeschlossene Elektromobil ergibt sich eine im Wesentlichen transparente Anordnung der Umschalteinheiten. Für das Elektromobil ergibt sich durch den Anschluss an einen Ladepunkt kein Unterschied zu einem direkten Anschluss an eine gewöhnliche Ladestation. Die Kommunikation kann standardgemäß erfolgen, so dass keine spezielle Ausführung eines Elektromobils zum Laden an einer erfindungsgemäßen Ladeanlage notwendig ist.

In einer Ausgestaltung umfassen die mehreren Ladeeinheiten jeweils mindestens eine der folgenden Einheiten: einen Leitungsschutzschalter zum Verhindern eines Überstroms; einen Leistungszähler zum Messen und Abrechnen einer abgegebenen Ladeleistung; einen Fehlerstrom-Schutzschalter zum Verhindern eines Fehlerstroms; einen Schaltschütz zum Durchschalten der Eingangsspannung, sodass die Eingangsspannung als Ladespannung bereitgestellt wird; und einen Residual Current Monitor, RCM, zum Überwachen eines Differenzstroms. Die Ladeeinheiten umfassen im Wesentlichen vorzugsweise dieselben Ladetechnik-Komponenten wie eine herkömmliche Ladestation. Insbesondere ist es sicherheitstechnisch erforderlich, dass verschiedene Überwachungen durchgeführt werden, um sicherzustellen, dass es nicht zu einem Fehlerstrom oder zu einer Überspannung kommt, die auf ein Problem im Elektromobil hindeuten könnte.

Weiter vorteilhafterweise ist die Anschlussschnittstelle zum Beziehen einer Dreiphasen-Wechselspannung ausgebildet. Die Ladeanlage ist zum Wechselstrom-Laden von Elektromobilen ausgeführt. Die über die Anschlussschnittstelle bezogene Drei-Phasen-Wechselspannung wird direkt als Ladespannung über die Ladeeinheiten und die Umschalteinheiten zum Ladepunkt bzw. zum Elektromobil durchgeschaltet.

In einer weiteren vorteilhaften Ausgestaltung umfasst die Steuereinheit eine speicherprogrammierbare Steuerung, SPS. Durch die Verwendung einer standardisierten SPS können Kosten eingespart werden und eine effiziente Implementierung sichergestellt werden. Die benötigten Funktionen können abgebildet werden, insbesondere kann die Steuerung und Konfiguration der verschiedenen Umschalteinheiten vorgenommen werden. Die Steuereinheit kann auch einen multifunktionalen Mikrocontroller umfassen.

In einer bevorzugten Ausgestaltung des erfindungsgemäßen Ladesystems ist ein Netzwerkkabel zwischen einem Ladepunkt und der Ladeanlage vorgesehen, wobei eine Ader des Netzwerkkabels mit einem Control-Pilot, CP, -Anschluss des Ladepunkts verbunden ist. Das CP-Signal wird über ein Netzwerkkabel geführt, um eine Weiterleitung über eine längere Strecke zu gewährleisten. Die Signalabflachung über ein Netzwerkkabel ist im Vergleich zu einem fünfadrigen Ladekabel wesentlich geringer. Eine Kommunikation über Distanzen im Bereich von 50 Metern ist üblicherweise problemlos möglich.

In einer weiteren vorteilhaften Ausgestaltung des Ladesystems umfassen die Ladepunkte jeweils eine drahtlose Kommunikationsschnittstelle, vorzugsweise eine RFID-Schnittstelle, zum Kommunizieren mit einem Elektromobil; und/oder eine Benutzerschnittstelle zum Freischalten eines Ladevorgangs und zum Durchführen eines Bezahlvorgangs durch einen Benutzer. Über eine drahtlose Schnittstelle (beispielsweise RFID, NFC oder Bluetooth, wobei auch eine Verwendung einer Smartphone App möglich ist) kann direkt mit einem Elektromobil (bzw. mit dem Benutzer/Fahrer des Elektromobils) kommuniziert werden, beispielsweise um eine Authentifizierung und/oder Abrechnung durchzuführen. Über eine Benutzerschnittstelle kann eine Interaktion mit einem Benutzer, insbesondere einem Fahrer des Elektromobils erfolgen, um den Ladevorgang zu initiieren und ebenfalls die Abrechnung sicherzustellen. Die Benutzerschnittstelle kann auch in Software realisiert sein, sodass beispielsweise der Benutzer mit einer entsprechenden Smartphone App die Freischaltung des Ladevorgangs initiieren und die Bezahlung veranlassen kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendet werden können, ohne den Rahmen der vorliegenden Erfindung zu verlassen. Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine Situation des Ladens mehrerer Elektromobile nach dem Stand der Technik;
- Figur 2: eine schematische Darstellung eines erfindungsgemäßen Ladesystems zum Wechselstrom-Laden von Elektromobilen;
- Figur 3: eine schematische Darstellung einer erfindungsgemäßen Ladeanlage;
- Figur 4: eine schematische Darstellung einer Ladeeinheit;
- Figur 5: eine schematische Darstellung einer Umschalteinheit;
- Figur 6: eine weitere schematische Darstellung einer Umschalteinheit;
- Figur 7: noch eine weitere schematische Darstellung einer Umschalteinheit;
- Figur 8: eine schematische Darstellung einer Verschaltung in einer Ausführungsform eines erfindungsgemäßen Ladesystems;
- Figur 9: eine schematische Darstellung des Ablaufs einer Kommunikation in einem erfindungsgemäßen Ladesystem;
- Figur 10: eine weitere Ausführungsform eines erfindungsgemäßen Ladesystems; und
- Figur 11: eine schematische Darstellung eines erfindungsgemäßen Ladeverfahrens.

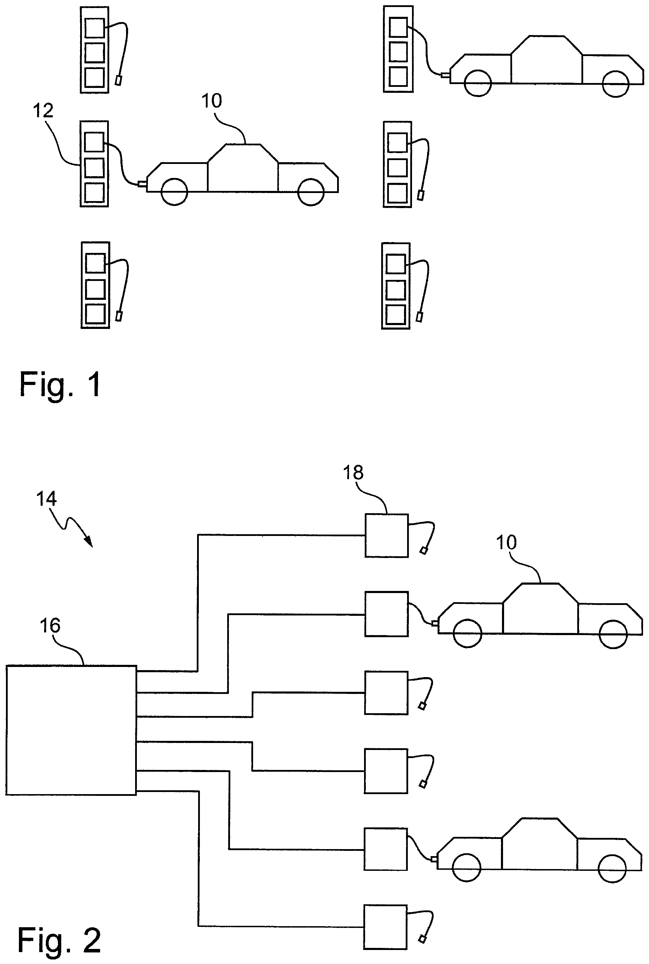

In der Figur 1 ist eine heutzutage regelmäßig in Parkplätzen oder Parkhäusern anzutreffende Situation beim Laden mehrerer Elektromobile 10 dargestellt. An mehreren Anschlussstellen bzw. Parkplätzen sind zum Laden parkender Elektromobile jeweils separate Ladestationen 12, die im dargestellten Beispiel als Ladesäulen ausgeführt sind, vorgesehen. Pro Parkmöglichkeit wird eine komplette Ladetechnik verwendet, wobei unter einer Ladetechnik alle zum Wechselstrom-Laden eines Elektromobils notwendigen Komponenten zu verstehen sind, die beispielsweise in einer Ladesäule integriert sind. Dadurch, dass die Elektromobile zumeist länger auf dem Parkplatz stehen, als der eigentliche Ladevorgang dauert, und oft nicht alle Parkplätze belegt sind, ist die Auslastung jeder einzelnen Ladestation 12 gering. Oft sind aus Kostengründen auch nur an einigen ausgewählten Parkplätzen entsprechende Ladestationen vorgesehen, so dass es zu Wartezeiten kommen kann.

Unter dem Begriff Elektromobil werden hierin insbesondere Elektroautos, Elektro-Lastkraftwagen oder auch Elektrozweiräder, die voll- oder teilelektrisch angetrieben werden, verstanden. Insbesondere umfasst der Begriff des Elektromobils hierin sowohl vollelektrische Fahrzeuge als auch Hybridfahrzeuge mit aufladbarem Energiespeicher.

In der Figur 2 ist ein erfindungsgemäßes Ladesystem 14 schematisch dargestellt. Das Ladesystem 14 basiert auf einer Ladeanlage 16, die über mehrere Ladeschnittstellen mehrere Ladepunkte 18 versorgt. An jedem Ladepunkt kann ein Elektromobil 10 für einen Ladevorgang zum Laden der Batterie angeschlossen werden. Das erfindungsgemäße Konzept entspricht insoweit einer Zentralisierung jedenfalls eines Teils der Funktionalitäten mehrerer Ladestationen. Durch die Verwendung vergleichsweise einfach aufgebauter Ladepunkte 18 können die kostenintensiveren Komponenten zum Laden der Elektromobile besser ausgelastet werden. Es kann eine Vielzahl von Ladepunkten 18 versorgt werden, sodass beispielsweise in einem Parkhaus an jedem einzelnen Parkplatz ein Ladepunkt vorgesehen sein kann.

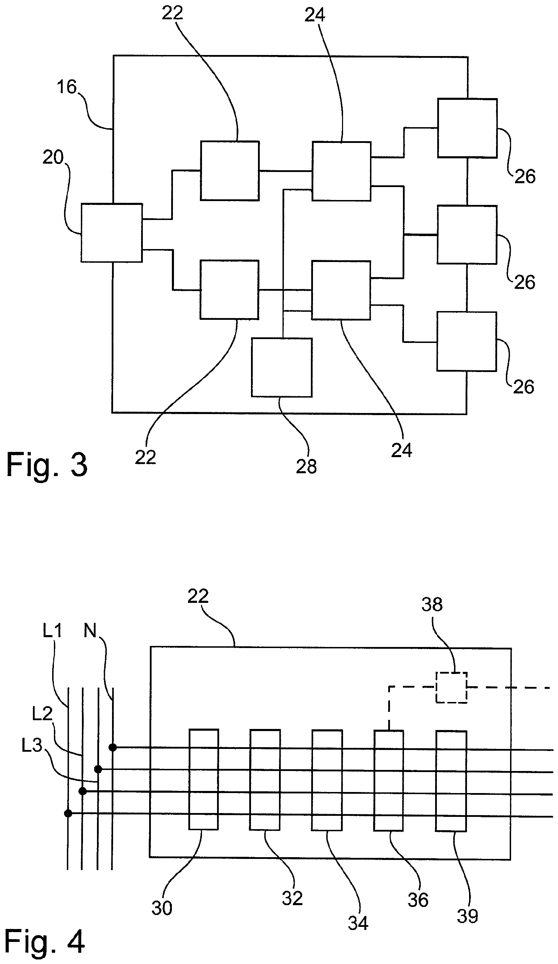

In der Figur 3 ist eine erfindungsgemäße Ladeanlage 16 schematisch dargestellt. Die Ladeanlage ist über eine Anschlussschnittstelle 20 an eine Eingangsspannung angeschlossen. Insbesondere kann die Ladeanlage 16 an ein Niederspannungsnetz angeschlossen sein und insoweit einem Haus- oder Anlagenanschluss entsprechen. In anderen Ausführungsformen können mehrere Anschlussschnittstellen vorgesehen sein.

Die Ladeanlage 16 umfasst mindestens zwei Ladeeinheiten 22, die die notwendige Ladetechnik zum Bereitstellen einer Ladespannung basierend auf der Eingangsspannung umfassen. Die Ladeeinheiten erfüllen dabei insbesondere Funktionen des Lademanagements und der Sicherheit. Ausgehend von den Ladeeinheiten 22 wird die bereitgestellte Ladespannung an mehrere Umschalteinheiten 24 weitergeleitet. Pro Ladeeinheit 22 ist dabei genau eine Umschalteinheit 24 vorgesehen. Die Umschalteinheiten 24 ermöglichen eine Verteilung der bereitgestellten Ladespannung auf eine Anzahl an Ladeschnittstellen 26.

Über die Ladeschnittstellen 26 können die einzelnen Ladepunkte, die beispielsweise an jedem Parkplatz vorgesehen sind, versorgt werden. Die Ladeschnittstellen 26 sind dabei insbesondere als Stecker bzw. Anschlüsse zum Weiterleiten der elektrischen Energie an eine entsprechende Verkabelung ausgebildet. Die Ladepunkte können zum kabellosen (induktiven) und kabelgebundenen (steckerbasierten) Laden eines Elektromobils ausgebildet sein.

Um die Schaltung der Umschalteinheiten 24 zu konfigurieren und sicherzustellen, dass diejenigen Ladeschnittstellen 26 versorgt sind, an denen ein Ladevorgang durchgeführt werden soll, ist eine Steuereinheit 28 vorgesehen. Die Steuereinheit steuert die Umschalteinheiten 24 so an, dass an allen belegten Ladepunkten ein Ladevorgang durchgeführt werden kann. Hierbei kann die Steuereinheit 28 als einzelne Einheit ausgebildet sein oder zwei getrennte Einheiten umfassen. Insbesondere kann die Steuereinheit 28 eine SPS-Steuerung sowie einen Mikroprozessor umfassen.

Die Kosteneinsparung ergibt sich daraus, dass die Anzahl an Ladeschnittstellen 26 größer als die Anzahl an Ladeeinheiten 22 ist. Die Ladeeinheiten werden besser ausgenutzt. Es versteht sich, dass die Ladeanlage 16 maximal so viele Elektromobile gleichzeitig versorgen kann, wie Ladeeinheiten 22 vorgesehen sind. Die Anzahl an parallel durchführbaren Ladevorgängen ist insoweit durch die Anzahl an Ladeeinheiten 22 limitiert. Sofern eine höhere Anzahl an Elektromobilen 10 gleichzeitig (parallel) aufgeladen werden soll, muss eine sequentielle Ladung erfolgen. Es werden also einzelne Fahrzeuge nacheinander geladen. Um die Reihenfolge festzulegen, kann beispielsweise nach dem first-come-first-serve Ansatz vorgegangen werden. Ist ein Ladevorgang beendet bzw. ist die Batterie eines Elektromobils gefüllt, wird die Ladespannung der Ladeeinheit 22 wieder weitergeschaltet, um für den nächsten Ladevorgang an einem anderen Ladepunkt zur Verfügung zu stehen.

Sind zu einem Zeitpunkt alle verfügbaren Ladeeinheiten in Verwendung, ist es nicht möglich, weitere Elektromobile gleichzeitig zu laden. Um diese Situation zu lösen, sind unterschiedliche Ladekonzepte denkbar, wie z. B. eine Ladung bis zu einem definierten Ladestand und ein anschließendes Umschalten, eine Priorisierung unterschiedlicher Fahrzeuge oder ein Laden nach Zeitintervall, bei dem ein Fahrzeug für eine bestimmte Zeit geladen wird, um dann zum nächsten Ladepunkt weiterzuschalten.

In der Figur 4 ist eine einzelne Ladeeinheit 22 schematisch dargestellt. Im dargestellten Ausführungsbeispiel ist die Ladeeinheit dazu ausgebildet, die Eingangsspannung über insgesamt vier Energieleitungen L1, L2, L3, N zu empfangen. Die verschiedenen Komponenten der Ladeeinheit 22 bewirken, dass ein sicherer Ladevorgang durchgeführt werden kann, bei dem sowohl die elektrischen Komponenten der Ladeanlage und des Elektromobils vor Beschädigung geschützt, als auch die Sicherheit eines menschlichen Benutzers gewährleistet ist.

Die Ladeeinheit 22 umfasst einen Leitungsschutzschalter 30, der als Überstromschutzeinrichtung zum Gewährleisten der Sicherheit einen Überstrom verhindert. Der Leitungsschutzschalter 30 kann insbesondere auch als Miniature Circuit Breaker (MCB) bezeichnet werden. Weiterhin umfasst die Ladeeinheit 22 einen Leistungszähler 32, der dazu dient, die abgegebene Ladeleistung zu messen, um so eine Abrechnung gegenüber dem Besitzer des Elektromobils zu ermöglichen. Der Leistungszähler 32 kann auch als Messgerät bezeichnet werden und insbesondere auf dem Induktionsprinzip basieren.

Weiterhin umfasst die Ladeeinheit 22 einen Fehlerstrom-Schutzschalter 34, der zum Verhindern eines Überstroms ausgebildet ist. Der Fehlerstrom-Schutzschalter 34 ist dabei insbesondere als FI-Schalter des Typs A ausgebildet. Sobald ein Fehlerstrom festgestellt wird, trennt der FI-Schutzschalter die Verbindung und verhindert somit einen gefährlich hohen Fehlerstrom.

Weiterhin ist ein Schaltschütz 36 vorgesehen. Dieser elektrisch oder elektromagnetisch betätigte Schalter erlaubt das Schalten großer elektrischer Leistungen, wie sie üblicherweise beim Laden eines Elektromobils erforderlich sind.

Zudem ist in der Ladeeinheit 22 ein Residual Current Monitor 39 vorgesehen, mit dem ein Differenzstrom überwacht wird. Ein derartiges sogenanntes RCM-Glied wird auch als FI-Schalter mit einer Typ B-Charakteristik bezeichnet. Es kann alternativ auch ein FI-Schalter des Typs B verwendet werden.

Weiterhin umfasst die Ladeeinheit 22 einen Ladecontroller 38, der basierend auf einem Eingangssignal die Steuerung des Schaltschütz 36 übernimmt, insoweit also dazu eingerichtet ist, die anliegende Eingangsspannung durchzuschalten, um einen Ladevorgang zu initiieren. Der Ladecontroller 38 ist dabei optional, wie durch die gestrichelte Darstellung angedeutet. Der Ladecontroller 38 dient dazu, die Ladeeinheit 22 anzusteuern, indem der Schaltschütz 36 geschaltet wird. Um den Ladevorgang zu initiieren, kommuniziert der Ladecontroller 38 vorzugsweise über einen CP-Kontakt des Ladepunkts. Der Ladecontroller 38 kommuniziert also direkt mit einem angeschlossenen Elektromobil und handelt mit diesem die notwendigen Parameter des Ladevorgangs aus.

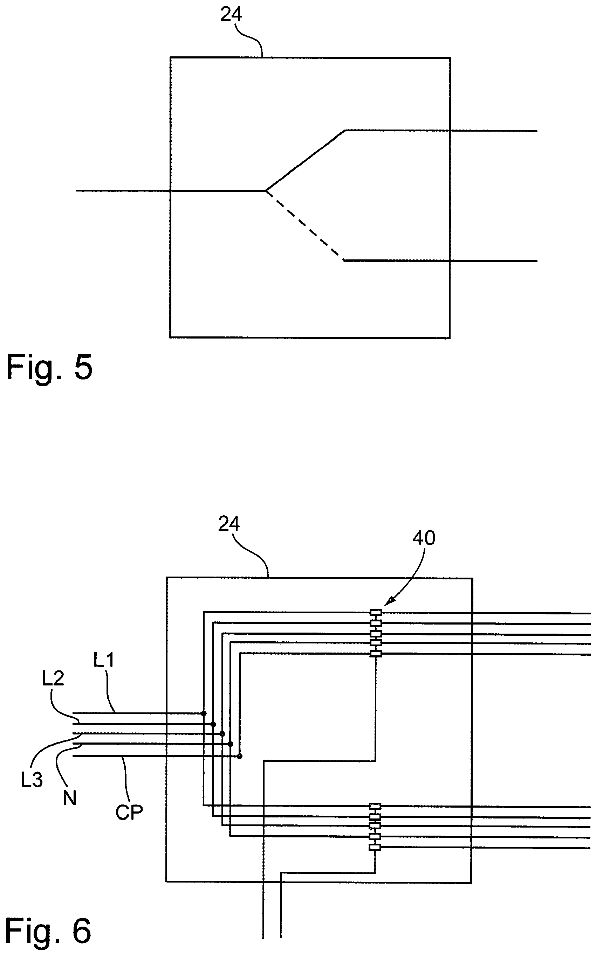

In der Figur 5 ist eine Umschalteinheit 24 schematisch dargestellt. Die Umschalteinheit 24 ist einer Ladeeinheit zugeordnet und empfängt von dieser Ladeeinheit die Ladespannung. Die Umschalteinheit 24 ermöglicht dann ein Umschalten der Ladespannung, so dass die Ladespannung zumindest an einer ersten oder an einer zweiten ausgewählten Ladeschnittstelle angelegt werden kann. Wie dargestellt, kann also ein Eingang (links) auf mehrere Ausgänge (rechts) aufgeschaltet werden.

In der Figur 6 ist eine Umschalteinheit 24 dargestellt, bei der insgesamt fünf Leitungen geschaltet werden. Insbesondere werden die Energieleitungen L1, L2, L3, N sowie die Steuerleitung CP geschaltet. Die Umschalteinheit 24 wird dabei im dargestellten Beispiel über eine Relaisschaltung umgesetzt. Insgesamt fünf Relais 40 pro Ausgang, also pro erreichbarer Ladeschnittstelle, sind vorgesehen, die die fünf Eingänge weiterschalten können. Es versteht sich, dass dabei gewährleistet werden muss, dass im Regelfall lediglich genau eine Ladeschnittstelle angeschlossen ist, die Ladespannung also nur zu einer Ladeschnittstelle weitergeschaltet werden darf. Die Ansteuerung der Relais erfolgt dabei durch die Steuereinheit (nicht dargestellt in der Figur).

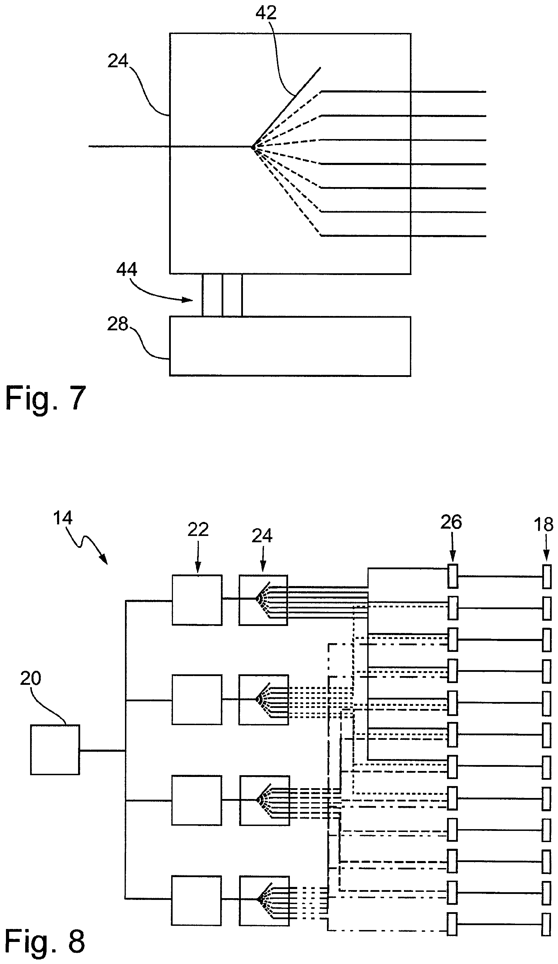

In der Figur 7 ist eine Ausführungsform der Umschalteinheit 24 im Zusammenspiel mit der Steuereinheit 28 dargestellt. Für die Ansteuerung bzw. Konfiguration der Umschalteinheit 24 sind drei Digitalsignale 44 vorgesehen, über die die Steuereinheit 28 die Umschalteinheit 24 ansteuert. Im dargestellten Beispiel umfasst die Steuereinheit 28 eine SPS-Steuerung.

Die Umschalteinheit 24 ist in der dargestellten Ausführungsform dazu ausgebildet, insgesamt acht verschiedene Schaltpositionen bereitzustellen. Sieben der Schaltpositionen bewirken, dass die Ladespannung an angeschlossene Ladeschnittstellen weitergeleitet wird. Die Ladespannung der der Umschalteinheit 24 zugeordneten Ladeeinheit kann also an sieben verschiedene Ladeschnittstellen angelegt werden. Die verbleibende achte Schaltposition 42 entspricht sozusagen einer Neutralposition, in die dann geschaltet wird, wenn an keinem Ladepunkt ein Elektromobil geladen werden soll. Es versteht sich, dass die Umschalteinheit auch mit einer anderen Anzahl an Schaltpositionen bereitgestellt werden.

In der Figur 8 ist schematisch eine Schaltung dargestellt, in der über die Anschlussschnittstelle 20 insgesamt vier Ladeeinheiten 22 und vier zugeordnete Umschalteinheiten 24 versorgt werden. Jede der vier Umschalteinheiten 24 kann die Ladespannung an sieben verschiedene Ladeschnittstellen 26 schalten. Insgesamt sind zwölf Ladeschnittstellen 26 vorgesehen, über die jeweils ein Ladepunkt 18 angeschlossen ist. Es versteht sich, dass auch andere Anzahlen an Ladeschnittstellen und Umschalteinheiten denkbar sind, je nach Anwendungsszenario.

Wie dargestellt ermöglicht die Verschaltung der vier Umschalteinheiten 24, dass die Ladepunkte 18 jeweils von mehreren Ladeeinheiten 22 aus bedient werden können. Es versteht sich, dass ein gleichzeitiges Anlegen der Ladespannung einer Ladeeinheit vorteilhafterweise verhindert wird.

Durch die Verschaltung wird die Flexibilität und die Gleichzeitigkeit des Systems erhöht. Prinzipiell sind unterschiedliche Konzepte des Verschaltens denkbar. Beispielsweise können beliebte Stellplätze (z. B. am Ausgang des Parkhauses) an eine hohe Anzahl an unterschiedlichen Ladeeinheiten angebunden sein. Falls eine Ladeeinheit 22 frei ist und ein Fahrzeug an einem Ladepunkt 18 geladen werden soll, der nicht über die zugehörige Umschalteinheit 24 bedient werden kann, ist es möglich, durch Umschalten einer anderen Umschalteinheit 24 dieses Fahrzeug zu bedienen. Wie dargestellt ist es aus Kostengründen vorteilhaft, wenn die Ladeschnittstellen 26 bzw. die Ladepunkte 18 zumindest teilweise nur von einer einzelnen Umschalteinheit 24 aus erreicht werden können. Wenn dieser Ladepunkt dann bedient werden soll, kann notwendigenfalls durch Umschalten von zwei Umschalteinheiten eine Versorgung sichergestellt werden.

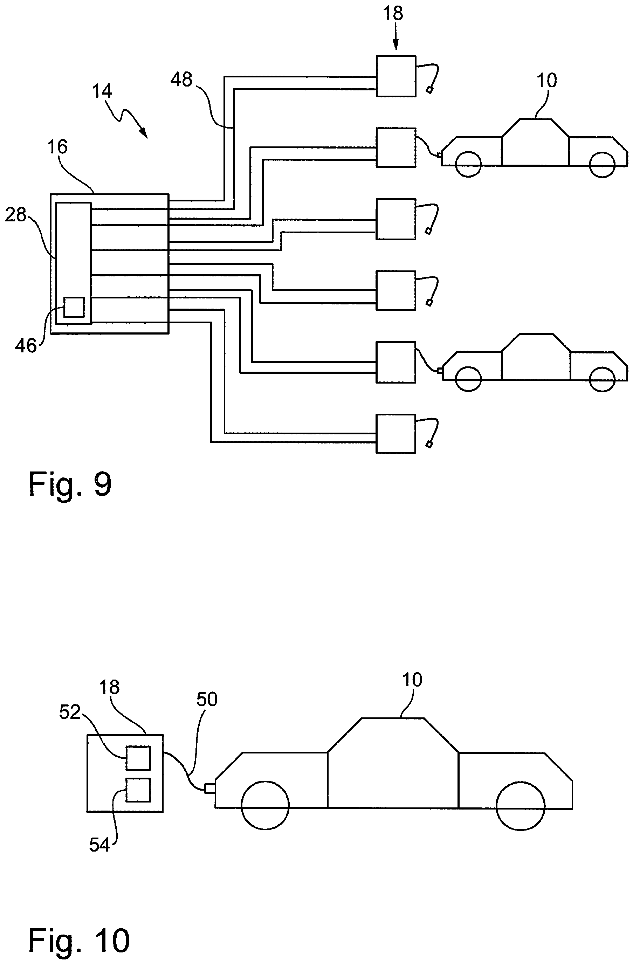

In der Figur 9 ist schematisch dargestellt, wie acht verschiedene Ladepunkte 18 in einem erfindungsgemäßen Ladesystem 14 überwacht werden, um eine Versorgung der Ladepunkte durch eine erfindungsgemäße Ladeanlage 16 sicherzustellen.

Zur Kommunikation mit den Ladepunkten 18 ist eine Kommunikationseinheit 46 vorgesehen, die im dargestellten Ausführungsbeispiel in die Steuereinheit 28 integriert ist. Die Kommunikationseinheit 46 erlaubt den Aufbau einer Kommunikationsverbindung mit einem Ladepunkt 18, um festzustellen, ob sich an dem Ladepunkt ein Elektromobil 10 befindet und ein Ladevorgang gestartet werden soll. Die Umschalteinheiten können dann entsprechend konfiguriert werden, sodass alle Ladepunkte 18 versorgt werden, an denen ein Ladevorgang durchgeführt werden soll.

Die Kommunikationsverbindung wird dabei in einer bevorzugten Ausführungsform über ein Netzwerkkabel 48, insbesondere ein Twisted-Pair-Kabel, also ein Kabel mit verdrillten Aderpaaren, das in Computernetzwerken als Ethernet-Kabel zum Einsatz kommt, hergestellt. Über dieses Netzwerkkabel 48 wird insbesondere das von einem CP-Anschluss eines Ladesteckers am Ladepunkt 18 abgegriffene Signal vom Ladepunkt 18 zur Ladeanlage 16 transportiert. Die Verwendung eines Netzwerkkabels 48 hat dabei den Vorteil, dass auch längere Strecken überwunden werden können, da ein Netzwerkkabel lediglich eine sehr geringe Signalabflachung aufweist. Im Vergleich zu einer Weiterleitung des CP-Signals über ein gewöhnliches Ladekabel können wesentlich größere Distanzen überwunden werden.

Es versteht sich, dass es auch möglich ist, die Kommunikationsverbindung in anderer Form herzustellen. Insbesondere kann auch eine drahtlose Verbindung hergestellt werden, beispielsweise über WLAN. Auch eine Powerline-Kommunikation ist denkbar.

In der Figur 10 ist das Zusammenspiel zwischen einem Ladepunkt 18 und einem Elektromobil 10 in einem erfindungsgemäßen Ladesystem schematisch dargestellt. Üblicherweise erfolgt die Anbindung des Elektromobils 10 über ein Standard-Ladekabel 50, über das auch ein Informationsaustausch erfolgen kann (insbesondere über CP-Stecker).

Der Ladepunkt kann eine drahtlose Kommunikationsschnittstelle 52, insbesondere eine RFID-Schnittstelle, umfassen, die eine drahtlose Kommunikation mit einer entsprechenden Schnittstelle im Elektromobil 10 erlaubt. Über diese drahtlose Funkverbindung können beispielsweise für die Abrechnung relevante Informationen (Bezahlfunktion) oder auch Informationen bezüglich des Ladevorgangs ausgetauscht werden.

Weiterhin kann der Ladepunkt 18 eine Benutzerschnittstelle 54 umfassen, über die der Benutzer, insbesondere der Fahrer des Elektromobils 10, Daten eingeben und Informationen erhalten kann. Beispielsweise kann hierüber die Abrechnung erfolgen oder kann eine Konfiguration des Ladevorgangs, wie beispielsweise eine Begrenzung der maximal aufzunehmenden Leistung, durchgeführt werden.

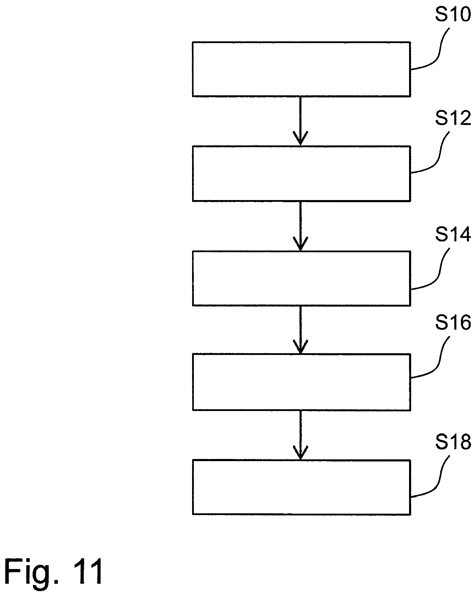

In der Figur 11 ist ein erfindungsgemäßes Ladeverfahren schematisch dargestellt. Das Ladeverfahren umfasst die Schritte des Beziehens S10 einer Eingangsspannung, des Bereitstellens S12 einer Ladespannung, des Weiterleitens S14 der Ladespannung an eine Mehrzahl von Ladepunkten, des Anlegens S16 der Ladespannung an einer auswählbaren Ladeschnittstelle und des Konfigurierens S18 mehrerer Umschalteinheiten. Das dargestellte Verfahren kann beispielsweise die Grundlage für eine Steuerung einer Ladeanlage bilden. Insbesondere kann das dargestellte Verfahren von einer SPS-Steuerung und/oder von einem Mikroprozessor ausgeführt werden.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die verschiedenen Einheiten können teilweise oder vollständig in Hard- oder auch in Software ausgeführt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Ladeanlage (16) zum Wechselstrom-Laden von Elektromobilen (10) an einer Mehrzahl von Ladepunkten (18), mit:
einer Anschlussschnittstelle (20) zum Beziehen einer Eingangsspannung;
mehreren Ladeeinheiten (22) zum Bereitstellen einer Ladespannung basierend auf der Eingangsspannung;
mehreren Ladeschnittstellen (26) zum Weiterleiten der Ladespannung an die Mehrzahl von Ladepunkten, wobei die Anzahl der Ladeschnittstellen größer als die Anzahl der Ladeeinheiten ist;
mehreren Umschalteinheiten (24) zum Anlegen der Ladespannung einer Ladeeinheit an eine auswählbare Ladeschnittstelle, wobei jede Umschalteinheit einer Ladeeinheit zugeordnet ist und mindestens zwei Schaltpositionen zum Schalten der Ladespannung zu einer ersten oder einer zweiten ausgewählten Ladeschnittstelle umfasst und wobei die mehreren Umschalteinheiten für jede Ladeschnittstelle mindestens eine Schaltposition zum Schalten der Ladespannung zu dieser Ladestelle umfassen; und
einer Steuereinheit (28) zum Konfigurieren der mehreren Umschalteinheiten, um die Ladespannung zu mindestens einer ausgewählten Ladeschnittstelle zu schalten.

2. Ladeanlage (16) nach Anspruch 1, wobei
die mehreren Umschalteinheiten (24) für eine der Anzahl der Ladeeinheiten (22) entsprechende Anzahl an Ladeschnittstellen (26) jeweils genau eine Schaltposition umfassen, in der die Ladespannung zu der Ladeschnittstelle geschaltet ist; und
jede Umschalteinheit vorzugsweise höchstens eine Schaltposition umfasst, in der die Ladespannung zu einer Ladeschnittstelle geschaltet ist, zu der die Ladespannung nur von einer Ladeschnittstelle geschaltet werden kann.

3. Ladeanlage (16) nach einem der vorstehenden Ansprüche, wobei die mehreren Umschalteinheiten (24) jeweils
ein Relais (40), vorzugsweise fünf Relais, pro erreichbarer Ladeschnittstelle (26) umfassen; und/oder
eine Schaltposition (42) umfassen, in der die Ladespannung zu keiner Ladeschnittstelle geschaltet ist.

4. Ladeanlage (16) nach einem der vorstehenden Ansprüche, mit einer Kommunikationseinheit (46) zum Aufbauen einer Kommunikationsverbindung mit einem Ladepunkt (18), um zu registrieren, ob sich ein Elektromobil (10) an dem Ladepunkt befindet, wobei
die Steuereinheit (28) dazu ausgebildet ist, die Umschalteinheiten (24) zu konfigurieren, um die Ladespannung zu dem Ladepunkt zu schalten, wenn sich ein Elektromobil an dem Ladepunkt befindet; und
die Kommunikationseinheit vorzugsweise in die Steuereinheit integriert ist.

5. Ladeanlage (16) nach Anspruch 4, wobei
die Kommunikationseinheit (46) zum Aufbauen der Kommunikationsverbindung über ein Netzwerkkabel (48) ausgebildet ist; und
die Kommunikationseinheit vorzugsweise zum Durchführen eines Pulsweitenmodulationsverfahrens über eine Ader des Netzwerkkabels ausgebildet ist, um zu registrieren, ob sich ein Elektromobil (10) an dem Ladepunkt (18) befindet.

6. Ladeanlage (16) nach einem der vorstehenden Ansprüche, mit einem Ladecontroller (38) zum Ansteuern einer Ladeeinheit (22), um die Bereitstellung der Ladespannung zu initiieren, wobei
die mehreren Ladeeinheiten vorzugsweise jeweils einen Ladecontroller umfassen.

7. Ladeanlage (16) nach Anspruch 6, wobei die Steuereinheit (28) zum Steuern des Ladecontrollers (38) ausgebildet ist, um die Bereitstellung der Ladespannung zu initiieren, wenn die mehreren Umschalteinheiten (24) konfiguriert sind.

8. Ladeanlage (16) nach einem der Ansprüche 6 oder 7, wobei
die mehreren Ladeeinheiten (22) jeweils einen Ladecontroller (38) umfassen; und
die mehreren Umschalteinheiten (24) jeweils zum Schalten einer Steuerleitung zwischen dem Ladecontroller und dem ausgewählten Ladepunkt (18) ausgebildet sind.

9. Ladeanlage (16) nach einem der vorstehenden Ansprüche, wobei die mehreren Ladeeinheiten (22) jeweils mindestens eine der folgenden Einheiten umfassen:
einen Leitungsschutzschalter (30) zum Verhindern einen Überstroms;
einen Leistungszähler (32) zum Messen und Abrechnen einer abgegebenen Ladeleistung;
einen Fehlerstrom-Schutzschalter (34) zum Verhindern eines Fehlerstroms;
einen Schaltschütz (36) zum Durchschalten der Eingangsspannung, sodass die Eingangsspannung als Ladespannung bereitgestellt wird; und
einen Residual Current Monitor, RCM, (39) zum Überwachen eines Differenzstroms.

10. Ladeanlage (16) nach einem der vorstehenden Ansprüche, wobei die Anschlussschnittstelle (20) zum Beziehen einer Dreiphasen-Wechselspannung ausgebildet ist.

11. Ladeanlage (16) nach einem der Ansprüche 1 bis 10, wobei die Steuereinheit (28) eine speicherprogrammierbare Steuerung, SPS, umfasst.

12. Ladeverfahren zum Wechselstrom-Laden von Elektromobilen (10) an einer Mehrzahl von Ladepunkten (18), mit den Schritten:
Beziehen (S10) einer Eingangsspannung über eine Anschlussschnittstelle (20);
Bereitstellen (S12) einer Ladespannung basierend auf der Eingangsspannung an mehreren Ladeeinheiten (22);
Weiterleiten (S14) der Ladespannung an die Mehrzahl von Ladepunkten in mehreren Ladeschnittstellen (26), wobei die Anzahl der Ladeschnittstellen größer als die Anzahl der Ladeeinheiten ist;
Anlegen (S16) der Ladespannung an eine auswählbare Ladeschnittstelle in mehreren Umschalteinheiten (24), wobei jede Umschalteinheit einer Ladeeinheit zugeordnet ist und mindestens zwei Schaltpositionen zum Schalten der Ladespannung zu einer ersten oder einer zweiten ausgewählten Ladeschnittstelle umfasst und wobei die mehreren Umschalteinheiten für jede Ladeschnittstelle mindestens eine Schaltposition zum Schalten der Ladespannung zu dieser Ladestelle umfassen; und
Konfigurieren (S18) der mehreren Umschalteinheiten in einer Steuereinheit (28), um die Ladespannung zu mindestens einer ausgewählten Ladeschnittstelle zu schalten.

13. Ladesystem (14) zum Wechselstrom-Laden von Elektromobilen (10), mit:
einer Ladeanlage (16) nach einem der Ansprüche 1 bis 11; und
einer Mehrzahl von Ladepunkten (18) zum Anschließen von Elektromobilen für einen Ladevorgang, wobei die Ladepunkte an die Ladeschnittstellen (26) angebunden sind.

14. Ladesystem (14) nach Anspruch 13, mit:
einer Ladeanlage (16) nach Anspruch 5; und
einem Netzwerkkabel (48) zwischen einem Ladepunkt (18) und der Ladeanlage, wobei die Ader des Netzwerkkabels mit einem Control Pilot, CP, Anschluss des Ladepunkts verbunden ist.

15. Ladesystem (14) nach einem der Ansprüche 13 bis 14, wobei die Ladepunkte jeweils
eine drahtlose Kommunikationsschnittstelle (52), vorzugsweise eine RFID-Schnittstelle, zum Kommunizieren mit einem Elektromobil (10) umfassen; und/oder
eine Benutzerschnittstelle (54) zum Freischalten eines Ladevorgangs und zum Durchführen eines Bezahlvorgangs durch einen Benutzer umfassen.
